# EUROPEAN PATENT SPECIFICATION

(11) **EP 3 700 356 B1**
(45) Date of publication and mention of the grant of the patent: **30.06.2021**
(21) Application number: 18782020.4
(22) Date of filing: 28.09.2018
(51) Int. Cl.: A23L 27/00, A23P 10/20, A23P 30/10, A23L 23/00

(54) **SHAPED, COMPOSITE SAVOURY CONCENTRATE COMPRISING GEL PIECES**
GEFORMTES, ZUSAMMENGESETZTES GESCHMACKSKONZENTRAT MIT GELTEILEN
CONCENTRÉ SAVOUREUX COMPOSITE FORMÉ COMPRENANT DES PIÈCES DE GEL

(30) Priority: 24.10.2017 EP 17198047
(43) Date of publication of application: 02.09.2020
(73) Proprietor: Unilever IP Holdings B.V., 3013 AL Rotterdam (NL)
(72) Inventor: SAILER, Winfried, 74074 Heilbronn (DE); SCHÄNZEL, Monika, Renate, 74074 Heilbronn (DE)
(74) Representative: van den Brom, Coenraad Richard
(86) International application number: PCT/EP2018/076471
(87) International publication number: WO 2019/081160

(56) References cited:
- EP-A1- 0 479 126
- WO-A1-2017/021071
- WO-A1-2017/186560
- US-A- 4 844 922
- US-A- 5 456 937
- US-A1- 2003 044 503
- US-A1- 2008 311 247
- US-A1- 2013 280 405
- US-A1- 2013 309 385

## Description

### TECHNICAL FIELD OF THE INVENTION

The present invention relates to a shaped, composite savoury concentrate comprising gel pieces and tissue-based food particles. It further relates to the use of a shaped, composite savoury concentrate for preparing a sauce, bouillon, or a gravy or a soup.

### BACKGROUND OF THE INVENTION

US2013/0280405 discloses a semi-solid food concentrate in the form of a gel or paste, comprising a saltsensitive gum (0.2-35%), NaCI (8-25%), a salt-stable structuring material and water (20-91.5%). Particulates of vegetable or meat may be present in an amount of 0.5-10%.

PCT/EP2017/059366 discloses a composite savoury food product of gel particles and tissue based particles. The spoonable seasoning described therein can be used like e.g. a bouillon powder. Many consumers, however, who feel they lack the necessary cooking skills may perceive this as off-putting and cumbersome as it requires experimenting how much needs to be dosed. The present application discloses a composite savoury food product of gel particles and tissue based particles in the form of a pressed shape like a rectangular tablet. Such a format allows consumers familiar with adding unit dosed bouillon cubes to use this new product with more confidence.

EP-A 0 479 126 describes a low-calorie foodstuff, comprising gel-particles produced from a thermally irreversible coagulum including glucomannan as a main component by chopping the coagulum. The Examples of the patent application describe the application of gel-particles of glucomannan coagulum in soup. Example 2 describes the addition of corn oil and emulsifier to gel-particles of neutral glucomannan coagulum, followed by stirring at high speed.

US 5,456,937 describes a method of flavouring a beverage or food which comprises forming a gelled, spherical flavour bead comprising gellan gum and one or more flavourings, and adding the bead to the beverage or food. The examples of the US patent describe vinegar beads that can be incorporated into salad dressing or sauces.

Gel-based savoury concentrates are described in WO2012097930 (A1). This international patent application describes a packaged savoury food concentrate in the form of a gel comprising, based on the weight of the total food concentrate without the packaging:
- from 2 wt.% to 15 wt.% of NaCl,
- water,
- an effective amount of gelling agent,
- from 5 wt.% to 60 wt.% of a liquid polyol,
- non-gelatinised starch.

JP 2015181360 describes the preparation of salt containing gel pieces and the application of these gel pieces in tomato sauce in a concentration of 21 wt.% or 31 wt.%.

WO 2017/186560, which was published after the priority date of the present application, describes a savoury composite food product comprising at least 35 wt.% of gel pieces having a mesh size in the range of 0.2-10 mm; 0.2-55 wt.% of tissue-based food particles having a mesh size in the range of 0.2-10 mm; at least 2 wt.% of lipophilic material covering said gel pieces and said tissue-based food particles; said savoury composite food product having the following composition:
- 20-75 wt.% water;
- 2-30 wt.% of oil;
- 0.1-40 wt.% of taste contributing components selected from glutamic acid, 5'-ribonucleotides, sucrose, glucose, fructose, lactose, lactic acid, citric acid, acetic acid and combinations thereof;
- 0.5-20% by weight of water of gelling agent;
- 35-1 100 mmol per 100 g of food product of alkalimetal cation selected from Na⁺, K⁺ and combinations thereof.

### SUMMARY OF THE INVENTION

The inventors have developed a prism shaped, composite savoury concentrate that offers the advantage that it can be provided in various attractive forms and textures. Furthermore, the product is shelf-stable and easy to dose. Moreover, the shaped composite savoury concentrate is consumer friendly as it dissolves more quickly than a non-composite, single gel savoury concentrate cube.

The prism shaped, composite savoury concentrate comprises at least 35 wt.% of gel pieces and 0.2-55 wt.% of discrete tissue-based food particles containing at least 50% by weight of dry matter of tissue material from plants or animals, based on total weight of the concentrate; said shaped, composite savoury concentrate having the following composition:
- 20-75 wt.% water;
- 0.1-40 wt.% of taste contributing components selected from glutamic acid, 5'-ribonucleotides, sucrose, glucose, fructose, lactose, lactic acid, citric acid, acetic acid and combinations thereof;
- 0.5-20% by weight of water of gelling agent;
- 35-1100 mmol per 100 g of concentrate of alkalimetal cation selected from Na⁺, K⁺ and combinations thereof.

The shaped, composite savoury concentrate of the present invention can be provided in a form that enables easy dosing while cooking, for example, a soup or stew. Due to the taste contributing components in the gel pieces, the concentrate may be employed in a way that releases the taste contributing components from the gel pieces, e.g. when it is added to hot water in the preparation of a bouillon, a soup, a sauce, a gravy, a dressing or a glaze, but also to create flavour specks in final application.

### DETAILED DESCRIPTION OF THE INVENTION

Accordingly, a first aspect of the invention relates to a prism shaped, composite savoury concentrate comprising at least 35 wt.% of gel pieces and 0.2-55 wt.% of tissue-based food particles containing at least 50% by weight of dry matter of tissue material from plants or animals, based on total weight of the concentrate; said shaped, composite savoury concentrate having the following composition:
- 20-75 wt.% water;
- 0.1-40 wt.% of taste contributing components selected from glutamic acid, 5'-ribonucleotides, sucrose, glucose, fructose, lactose, lactic acid, citric acid, acetic acid and combinations thereof;
- 0.5-20% by weight of water of gelling agent;
- 35-1100 mmol per 100 g of concentrate of alkalimetal cation selected from Na⁺, K⁺ and combinations thereof.

The term "gel pieces" as used herein refers to cohesive particles containing water, gelling agent and optionally further ingredients, such as taste contributing components. Typically, the gel pieces contain a gel network that holds together the water and other ingredients.

The term "shaped, composite savoury concentrate" as used herein refers to a free-standing mass containing a plurality of gel pieces and tissue based food particles. The free-standing mass typically has a cubic or cuboid shape, the surface of which being defined by the constituent gel pieces and tissue based food particles such that the surface has a textured appearance to the naked eye.

The term "tissue-based food particles" as used herein refers to discrete particles that contain at least 50% by weight of dry matter of tissue material from plants or animals.

The term "glutamic acid" as used herein encompasses both the protonated acid and salts thereof. The same applies to each of lactic acid, citric acid and acetic acid,

The term "mesh size" as used herein refers to a particle size that has been determined with the help of a mesh material. In order to determine the percentage of particles having a mesh size within the range of a minimum of X mm and a maximum of Y mm, the particles are first sieved on a first mesh material having a mesh of Y mm. Subsequently, the material that has passed the first mesh material is sieved on a second mesh material having a mesh of X mm. The percentage of the total amount of particles that passes mesh material Y but not mesh material X equals the percentage of particles having a mesh size in the range of X to Y mm. In order to get an adequate measurement of the particle size it is necessary to ensure that the particles do not stick together. This may be achieved by sieving in a suitable liquid medium, such as water or salt solution, using a sieving time of, for instance, 15 seconds.

The shaped, composite savoury concentrate of the present invention preferably contains at least 50 wt.%, most preferably 65 wt.%, even more preferably 75 wt.%, most preferably 85 wt.%, particularly preferably 95 wt.% of the gel pieces. Preferably the gel pieces have a mesh size of between 0.2 and 10 mm, more preferably having a mesh size in the range of 0.25-7 mm and even more preferably in the range of 0.5-5 mm.

Preferably, wherein the concentrate is cuboid or cubic, preferably wherein the surface of the prism shaped concentrate has the appearance of an uneven texture.

In a preferred embodiment, the combination of the gel pieces and the tissue-based food particles constitute at least 70 wt.%, preferably at least 80 wt.% and even more preferably at least 90 wt.% of the shaped, composite savoury concentrate.

In accordance with a particularly preferred embodiment of the invention, the shaped, composite savoury concentrate dissolves within 5 minutes, more preferably within 3 minutes, even more preferably within 2 minutes after having been added to hot water having a temperature of 95°C and applying gentle stirring. Preferably, the shaped, composite savoury concentrate dissolves within 5 minutes, more preferably within 3 minutes. Even more preferably, the gel pieces dissolve within 2 minutes after having been added to hot water having a temperature of 90°C and applying gentle stirring. By employing gel pieces that dissolve in hot water, it is ensured that the taste contributing components that are present in the gel pieces are rapidly released and homogeneously distributed throughout the hot water.

The tissue-based food particles in the shaped, composite savoury concentrate preferably contain at least 70% by weight of dry matter, more preferably at least 80% by weight of dry matter of tissue material from plants or animals.

In accordance with a particularly preferred embodiment, the shaped, composite savoury concentrate contains at least 1 wt.%, more preferably at least 3 wt.% and most preferably at least 5 wt.% of pieces of plant material, said plant material being selected from vegetables, herbs, spices, fruit and combinations thereof, said plant material preferably having a mesh size in the range of 0.2-10 mm.

Typically, the shaped, composite savoury concentrate contains 0.5-50 wt.%, more preferably 0.8-45 wt.% and most preferably 1-40 wt.% of pieces of tissue-based food particles preferably having a mesh size in the range of 0.2-10 mm.

The shaped, composite savoury concentrate of the present invention preferably contains 0.2-50 wt.%, more preferably 0.5-45 wt.% and most preferably 0.8-40 wt.% of pieces of plant material preferably having a mesh size in the range of 0.2-10 mm.

According to a particularly preferred embodiment, the tissue-based food particles contain at least 70% by weight of dry matter, more preferably at least 80% by weight of dry matter of tissue material from plants.

Examples of tissue material from plant or animals include vegetables, herbs, spices, fruit, nuts, grains, meat and combinations thereof. Preferably the tissue material is edible material selected from vegetables, herbs, spices and fruit.

The shaped, composite savoury concentrate of the present invention typically contains 25-70 wt.%, more preferably 30-68 wt.% and most preferably 35-65 wt.% water. This water content includes all the water contained in the shaped, composite savoury concentrate including, for instance, water that is contained in the gel pieces and in tissue-based food particles.

The shaped, composite savoury concentrate typically has a water activity of 0.5-0.9, more preferably from 0.55-0.85, most preferably between 0.60 and 0.80.

The taste contributing components typically are present in the shaped, composite savoury concentrate in a concentration of 0.3-30 wt.%, more preferably of 0.5-20 wt.% and most preferably of 1-10 wt.%.

In accordance with one preferred embodiment, the shaped, composite savoury concentrate contains 50-500 mmol, more preferably 70-450 mmol and most preferably 100-400 mmol alkalimetal cation selected from Na⁺, K⁺ and combinations thereof per 100 g of concentrate.

The shaped, composite savoury concentrate preferably contains alkalimetal cation in a concentration of 50-900 mmol per 100 g of water. More preferably the product contains alkalimetal cation in a concentration of 250-750 mmol per 100 g of water, most preferably of 400-550 mmol per 100 g of water.

According to another preferred embodiment, the shaped, composite savoury concentrate contains at least 0.1 wt.%, preferably at least 0.3 wt.% of taste enhancing components selected from glutamate, 5'-ribonucleotides and combinations thereof. The presence of the latter taste contributing components makes the shaped, composite savoury concentrate particularly suitable for use as a taste enhancer in savoury products. Glutamate and/or 5'-ribonucleotides can be introduced in the present composite concentrate as such or in the form of e.g. yeast extract or protein hydrolysates.

The gelling agent is preferably contained in the shaped, composite savoury concentrate in a concentration of 0.8-10% by weight of water, more preferably of 1-6% by weight of water and most preferably of 1.2-5% by weight of water.

The gelling agent that is present in the shaped, composite savoury concentrate is preferably selected from the group of agar, carrageenans, pectins, xanthan gum, galactomanans, glucomanans, legume starch (e.g. pea starch) and combinations thereof. More preferably, the gelling agent is selected from agar, locust bean gum, xanthan gum, pectin, carrageenan and combinations thereof. Most preferably, the gelling agent is agar.

The carrageenan employed as a gelling agent is preferably selected from kappacarrageenan, iota-carrageenan and combinations thereof.

In accordance with an advantageous embodiment, the gelling agent comprises a combination of locust bean gum and xanthan gum in a combined concentration of 1-5%, more preferably of 2-4% by weight of water. Preferably locust bean gum and xanthan gum are used in a weight ratio of 1:9 to 9:1, more preferably in a weight ratio of 3:7 to 7:3.

According to a particularly preferred embodiment, the shaped, composite savoury concentrate contains, calculated by weight of water, 1-8%, more preferably 1.5-6%, most preferably 2-5% of agar.

The gel pieces in the shaped, composite savoury concentrate of the present invention preferably are not capsules with a liquid interior. Even more preferably, the gel pieces are homogeneous in composition.

In another equally advantageous embodiment of the shaped, composite savoury concentrate, the gel pieces of the composite concentrate are irregularly shaped. Irregularly shaped gel pieces may be prepared by first preparing a gel and subsequently breaking up the gel under conditions of shear. The irregularly shaped gel pieces offer the advantage that they have a 'natural' look that combines nicely with natural ingredients such as pieces of plant material.
The gel pieces of the shaped, composite savoury concentrate typically contain 25-80 wt.%, more preferably 30-75 wt.% and most preferably 40-70 wt.% water.

According to another preferred embodiment, the gel pieces contain at least 1 wt.%, more preferably 1.2-20 wt.% and most preferably 1.5-12 wt.% of gelling agent. The gelling agent in the gel pieces is preferably selected from the group of agar, carragenans, pectins, xanthan gum, galactomanans, glucomanans, and combinations thereof.

According to a particularly preferred embodiment the gel pieces contain 1-9 wt.%, more preferably 1.2-7 wt.% of agar.

The taste contributing components typically are present in the gel pieces in a concentration of 0.5-50 wt.%, more preferably of 1-30 wt.% and most preferably of 2-20 wt.%.

According to a preferred embodiment, the gel pieces contain at least 0.1 wt.%, preferably at least 0.3 wt.% of taste enhancing components selected from glutamate, 5'-ribonucleotides and combinations thereof. The presence of the latter taste contributing components makes the concentrate particularly suitable for use a taste enhancer in savoury products.

A particularly preferred embodiment of the present invention relates to a shaped, composite savoury concentrate that comprises:
- 40-75 wt.% water;
- 0.5-20 wt.% of the taste contributing components;
- 70-1100 mmol alkalimetal cation selected from Na⁺, K⁺ and combinations thereof per 100 g of concentrate.

It is preferred that the shaped, composite savoury concentrate is packaged in a unit dose, preferably having a weight of 2 g to 50 g, preferably 4 g to 40 g, more preferably 6 g to 30 g, more preferably 8 g to 25 g.

Another aspect of the present invention relates to a process for preparing a shaped, composite savoury concentrate according to the invention
comprising the steps of:
a) providing a mix of gel particles; and tissue based particles
b) pressing said mix of gel and tissue-based particles together in a mould.

In a particularly preferred embodiment of the present process, gel pieces having a high water content are mixed with dry tissue-based food particles, following which the dry tissue-based food particles become hydrated as a result of water migration from the gel pieces to the tissue-based food particles. In accordance with this embodiment, the gel pieces employed in the process preferably have a water content of 50-90 wt.%, more preferably of 55-85 wt.%. The tissue-based food particles employed preferably have a water content of less than 20 wt.%, more preferably of less than 18 wt.%, most preferably of less than 15 wt.%.

The inventors have found that addition of tissue-based food particles having a low water content contributes to the shelf-stability of the shaped, composite savoury concentrate. More particularly, it was observed that the addition of dry tissue-based food particles effectively reduces syneresis.

The gel pieces employed in the present process may be by, for example, producing first a body of aqueous gel is prepared and subsequently, this body of gel is divided into gel pieces, e.g. by cutting the body of gel in a cutting device.

The aqueous gel is preferably prepared by mixing the dry ingredients with water, and optionally heating the resultant mixture to between 50 and 110°C, for between 1 and 10 minutes, preferably between 2 and 8 minutes. The aqueous gel mixture is left to stand, preferably in the range of 5-10°C, preferably for between 1 and 24 hours. The mixing may be carried out in any mixer known in the art.

The shaped, composite savoury concentrate is prepared by mixing the gel pieces with tissue particles and then pressing the gel pieces and tissue particles together in a mould. Pressing may be carried out in any suitable pressing device known in the art.

The invention is further illustrated by the following non-limiting examples.

### EXAMPLES

### Example 1

Shaped, composite savoury concentrates containing irregular gel pieces were prepared as described below.

An aqueous gelling composition was prepared on the basis of the recipe that is shown in Table 1.

**Table 1**

| | **wt.%** |
|---|---|
| Tap water | 67.34 |
| Salt | 22.54 |
| Sugar | 2.2 |
| Yeast Extract Powder (<1% salt) | 1.83 |
| Turmeric, ground | 0.03 |
| Chicken extract powder | 1.65 |
| Mono-sodium glutamate | 2.00 |
| Inosinate/Guanylate | 0.20 |
| Agar | 2.2 |
| White pepper, ground | 0.01 |

The aqueous gelling composition was prepared in pilot plant equipment (Fryma Koruma MaxxD Lab with standard toothed rotor-stator of 4 mm) in a batch of 15 kg. The rotor-stator system was used with maximum shear of 2000 rpm together with the scraper constantly at 32 rpm. The dry ingredients were sucked-in via a homogeniser (by applying a vacuum) and admixed to the water in the vessel to form a homogenous mixture. The mixture was heated to 100°C and kept at this temperature for 1 min.

The hot aqueous gelling composition was transferred into a rectangular container (appr. 1.3 kg), covered with plastic foil and kept overnight in a refrigerator (5°C). The cooled gel was cut into 7x7x7cm pieces. About 1,3 kg of these cubes were transferred into a Lab ADE table cutter (approx. 111 size; equipped with 3 sickle knifes) and were cut for about 18 seconds at speed 1 (20 rpm). The gel pieces were removed from the cutter and sieved through a 8 mm sieve to remove very coarse material and then over a 5 mm and 0.5 mm sieve to obtain a fraction with particle sizes between 0.5-5mm. The cut gel so obtained was composed of irregularly shaped gel pieces.

Next, these irregular gel pieces were used to prepare composite savoury concentrates of different compositions. The recipes of these savoury composite food products are shown in Table 2.

**Table 2**

| | **wt.%** | |
|---|---|---|
| | **Sample 1** | **Sample 2** |
| Gel pieces | 97.8 | 96 |
| Air dried carrot granules (1-2 mm) | 2.0 | - |
| Air dried parsley (2-4 mm) | 0.2 | 4 |

These composite food products were prepared by mixing the gel pieces with the other components at minimum speed (0.5 on scale) in a Kenwood mixer (Cooking Chef, 6,71 bowl), equipped with stainless steel K-beater until homogenous.

The composite savoury concentrates was then pressed together to form a shaped composite savoury concentrates. Approx. 12g of prepared aqueous gelling composition shown in table 1 was filled in a rectangular shaping form for cubes (e.g. 3 x 2.5cm size). The possible filling volume is limited via height of 4.5cm. The stamp was insert in the filled cubing form. The height of the cube is defined by the cubing stamp and was chosen e.g. with 3.25 cm length. The cubing stamp itself has a weight of 515g. An additional force on top of the stamp of 1 kg was applied directly after filling. The pressing force was performed via Texture Analyser TA - XT2 plus (Stable Micro Systems Ltd) with a cylindrical probe of 2,5cm diameter.

| | | |
|---|---|---|
| • Program: | Used Tool: | Cylindrical finger probe (2,5cm diameter) |
| • Mode: | Compression | |
| • Pre - Test Speed: | 10.0 mm/s | |
| • Test Speed: | 0.5 mm/s | |
| • Post - Test Speed: | 10 mm/s | |
| • Force: | 1000 g | |
| • Trigger Type: | 0.1 g | |

The thus formed cube is taken out of the form and transferred in an air-tight packaging material.

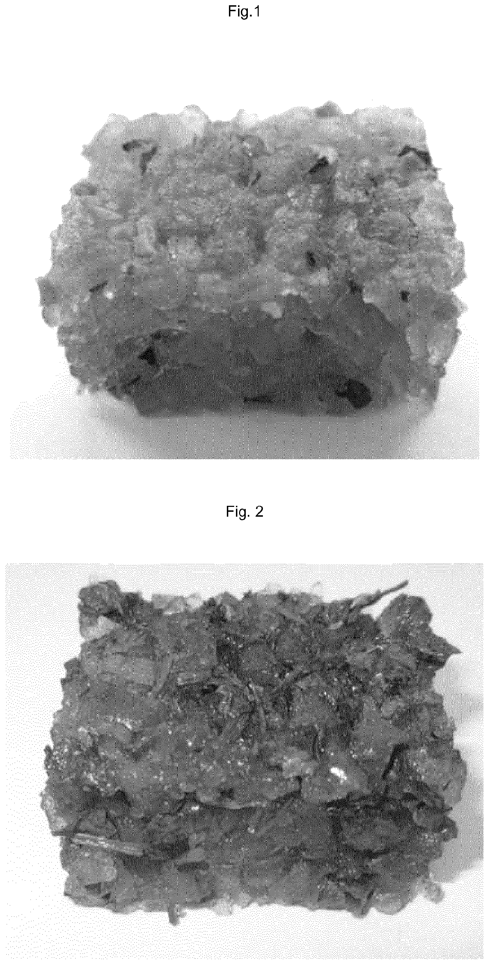

Figure 1 shows a shaped, composite savoury concentrate according to sample 1.
Figure 2 shows a shaped, composite savoury concentrate according to sample 2. The shaped, composite savoury food products of the present invention have a pleasant, natural, uneven appearance. No syneresis was observed for samples 1 and 2 after storage for one month.

### Comparative sample

As a comparative sample, a control agar gel cube was prepared having the same composition as shown in Table 1. A cube of agar gel having dimensions 3 x 2.5 x 3.25 cm was cut out of the cooled gel used in the preparation of samples 1 and 2.

### Dissolution tests

The shaped, composite savoury concentrate were subjected to dissolution tests. The dissolution time was determined by monitoring the conductivity during dissolution of a shaped, composite savoury concentrate in 92 °C deionized water. The conductivity increases by the dissolving of ionic constituents in the sample, e.g. NaCl, MSG etc.. until the sample is completely dissolved and no further increase in conductivity can be measured.

The conductivity was measuring using an InoLab 740 level 3 active multifunction box with standard conductivity cell TetraCon^{R} 325.

1 litre of deionized water at 92 °C was stirred on a magnetic stirrer. The sample was added and the conductivity measured. The dissolution of the control cube took more than 300 seconds whereas sample 1 and sample 2 consisting of gel pieces took less than 60 seconds to dissolve.

### Example 2

Shaped savoury composite savoury concentrates containing gel pieces were prepared starting from an aqueous gelling composition having the composition shown in Table 3 below:

**Table 3**

| | **Wt.%** |
|---|---|
| Tap water | 67.34 |
| Salt | 22.54 |
| Sugar | 2.6 |
| Yeast Extract Powder (<1 % salt) | 1.83 |
| Turmeric, ground | 0.03 |
| Chicken extract powder | 1.65 |
| Mono-sodium glutamate | 2.00 |
| Inosinate/Guanylate | 0.20 |
| Xanthan | 0.90 |
| Locust bean gum | 0.90 |
| White pepper, ground | 0.01 |

A batch of 1500 g was produced in Thermomix TM31 equipment. The powder ingredients were homogenously mixed into the water at 40°C while stirring at maximum speed 5. Next, the mixture was heated to 85°C and held at 85°C for 3 minutes, followed by filling into a rectangular container (-1,3 kg) that was subsequently covered with plastic foil and kept overnight at 5°C.

The cooled gel was cut into approx. 5x5x5cm pieces. About 1,3kg of these cubes were transferred into a Lab ADE table cutter (approx. 111 size; equipped with 3 sickle knifes) and were cut in about 12 seconds at speed 1 (20 rpm). The gel pieces were removed from the cutter. The gel pieces were sieved through a 5mm sieve and a 0.5 mm sieve to obtain a fraction with particle sizes of 0.5-5mm. The cut gel so obtained was composed of irregularly shaped gel pieces.

Next, these irregularly shaped gel pieces were used to prepare savoury composite savoury concentrates as per Example 1, on the basis of the recipe shown in Table 4.

**Table 4**

| | **Wt.% Sample 3** |
|---|---|
| Gel pieces | 96 |
| Air dried carrot granules (1-2 mm) | 2.8 |
| Air dried bell pepper (1-3mm) | 0.7 |
| Air dried leek (0,5-1,5mm) | 0,35 |
| Air dried parsley (2-4 mm) | 0.16 |

| | |
|---|---|
| ¹ Air dried parsley, diameter 2-4 mm | |

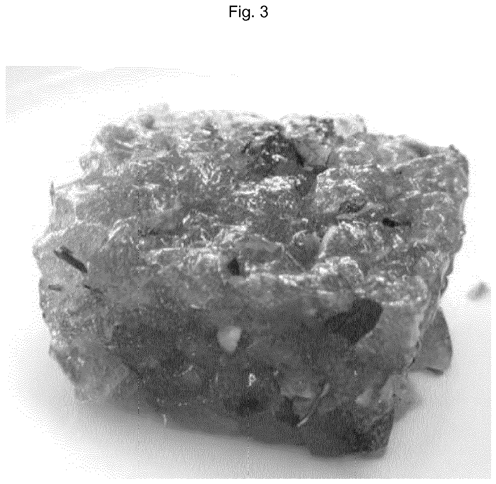

Figure 3 shows a shaped, composite savoury concentrate according to sample 3. The shaped, composite savoury food product of the present invention have a pleasant, natural, uneven appearance. No syneresis was observed for sample 3 after storage for one month.

After three days, the product was analysed to determine the respective concentrations of gel pieces and plant material (vegetable and herb particles) within the composite products. The results are shown in Table 5.

**Table 5**

| | **Wt.%** |
|---|---|
| Gel pieces | 75 |
| tissue-based food particles (plant material) | 25 |

The results demonstrate that the tissue-based food particles (plant material) are effectively rehydrated as a result of water migration from gel pieces to the plant material.

## Claims

1. A prism shaped, composite savoury concentrate comprising at least 35 wt.% of a plurality of gel pieces and 0.2-55 wt.% of discrete tissue-based food particles containing at least 50% by weight of dry matter of tissue material from plants or animals, based on total weight of the concentrate; said shaped, composite savoury concentrate having the following composition:
• 20-75 wt.% water;
• 0.1-40 wt.% of taste contributing components selected from glutamic acid, 5'-ribonucleotides, sucrose, glucose, fructose, lactose, lactic acid, citric acid, acetic acid and combinations thereof;
• 0.5-20% by weight of water of gelling agent;
• 35-1100 mmol per 100 g of concentrate of alkalimetal cation selected from Na⁺, K⁺ and combinations thereof.

2. Shaped, composite savoury concentrate according to claim 1, wherein the concentrate is cuboid or cubic, preferably wherein the surface of the prism shaped concentrate has the appearance of an uneven texture.

3. Shaped, composite savoury concentrate according to claim 1 or 2, wherein the combination of the gel pieces and the tissue-based food particles constitute at least 70 wt.%, preferably at least 80 wt.% and even more preferably at least 90 wt.% of the shaped, composite savoury concentrate.

4. Shaped, composite savoury concentrate according to claim 1 or 2, wherein the tissue-based food particles contain at least 70% by weight of dry matter of tissue material from plants or animals.

5. Shaped, composite savoury concentrate according to claim 4, wherein the product contains at least 1 wt.%, preferably at least 3 wt.% of pieces of plant material, said plant material being selected from vegetables, herbs, spices, fruit and combinations thereof, said plant material preferably having a mesh size in the range of 0.2-10 mm.

6. Shaped, composite savoury concentrate according to any one of the preceding claims, wherein the food product comprises at least 45 wt.%, preferably 50-95 wt.% of the gel pieces.

7. Shaped, composite savoury concentrate according to any one of the preceding claims, wherein the gel pieces have a mesh size in the range of 0.2-10 mm.

8. Shaped, composite savoury concentrate according to any one of the preceding claims, wherein the food product has a water activity of 0.5-0.9, more preferably from 0.55-0.85, most preferably between 0.60 and 0.80.

9. Shaped, composite savoury concentrate according to any one of the preceding claims, wherein the composite food product contains alkalimetal cation in a concentration of at least 50 mmol per 100 g of water.

10. Shaped, composite savoury concentrate according to any one of the preceding claims, wherein the gelling agent is selected from the group of agar, carrageenans, pectins, xanthan gum, galactomanans, glucomanans, legume starch and combinations thereof.

11. Shaped, composite savoury concentrate according to any one of the preceding claims, wherein the food product contains 0.3-30 wt.%, preferably of 0.5-20 wt.% of the taste contributing components, preferably wherein at least 0.1 wt.%, preferably at least 0.3 wt.% of taste enhancing components selected from glutamate, 5'-ribonucleotides and combinations thereof.

12. Shaped, composite savoury concentrate according to any one of the preceding claims, wherein the shaped, composite savoury concentrate is packaged in a unit dose, preferably having a weight of has a weight of 2 g to 50 g, preferably 4 g to 40 g, more preferably 6 g to 30 g, more preferably 8 g to 25 g.

13. A process for preparing a shaped, composite savoury concentrate according to any one of the preceding claims, said process comprising mixing gel pieces with tissue-based food particles and pressing the mixture of gel pieces and tissue-based food particles together in a mould.

14. A process according to claim 13 whereby gel pieces having a water content of 50-90 wt% are mixed with tissue-based food particles having a water content of less than 20 wt.%.:

15. Use of a shaped, composite savoury concentrate according to any one of claims 1 to 12 for preparing a sauce, bouillon, or a gravy or a soup.

## Patentansprüche

1. Prismenförmiges, zusammengesetztes, schmackhaftes Konzentrat, umfassend mindestens 35 Gew.-% einer Vielzahl von Gelstücken und 0,2-55 Gew.-% diskreter Lebensmittelpartikel auf Gewebebasis, die mindestens 50%, bezogen auf das Gewicht der Trockenmasse, von Gewebematerial von Pflanzen oder Tieren enthalten, bezogen auf das Gesamtgewicht des Konzentrats; wobei das geformte, zusammengesetzte, schmackhafte Konzentrat die folgende Zusammensetzung aufweist:
• 20-75 Gew.-% Wasser;
• 0,1-40 Gew.-% zum Geschmack beitragende Komponenten, ausgewählt aus Glutaminsäure, 5'-Ribonucleotiden, Saccharose, Glucose, Fructose, Lactose, Milchsäure, Citronensäure, Essigsäure und Kombinationen davon;
• 0,5-20%, bezogen auf das Gewicht des Wassers, Geliermittel;
• 35-1100 mmol pro 100 g Konzentrat Alkalimetallkationen, ausgewählt aus Na⁺, K⁺ und Kombinationen davon.

2. Geformtes, zusammengesetztes, schmackhaftes Konzentrat nach Anspruch 1, wobei das Konzentrat quaderförmig oder kubisch ist, wobei die Oberfläche des prismenförmigen Konzentrats bevorzugt das Aussehen einer ungleichmäßigen Textur aufweist.

3. Geformtes, zusammengesetztes, schmackhaftes Konzentrat nach Anspruch 1 oder 2, wobei die Kombination der Gelstücke und der Lebensmittelpartikel auf Gewebebasis mindestens 70 Gew.-%, bevorzugt mindestens 80 Gew.-% und noch bevorzugter mindestens 90 Gew.-% des geformten, zusammengesetzten, schmackhaften Konzentrats ausmacht.

4. Geformtes, zusammengesetztes, schmackhaftes Konzentrat nach Anspruch 1 oder 2, wobei die Lebensmittelpartikel auf Gewebebasis mindestens 70%, bezogen auf das Gewicht der Trockenmasse, von Gewebematerial von Pflanzen oder Tieren enthalten.

5. Geformtes, zusammengesetztes, schmackhaftes Konzentrat nach Anspruch 4, wobei das Produkt mindestens 1 Gew.-%, bevorzugt mindestens 3 Gew.-%, Pflanzenmaterialstücke enthält, wobei das Pflanzenmaterial ausgewählt ist aus Gemüse, Kräutern, Gewürzen, Früchten und Kombinationen davon, wobei das Pflanzenmaterial bevorzugt eine Maschengröße im Bereich von 0,2-10 mm aufweist.

6. Geformtes, zusammengesetztes, schmackhaftes Konzentrat nach irgendeinem der vorhergehenden Ansprüche, wobei das Lebensmittelprodukt mindestens 45 Gew.-%, bevorzugt 50-95 Gew.-%, der Gelstücke umfasst.

7. Geformtes, zusammengesetztes, schmackhaftes Konzentrat nach irgendeinem der vorhergehenden Ansprüche, wobei die Gelstücke eine Maschengröße im Bereich von 0,2-10 mm aufweisen.

8. Geformtes, zusammengesetztes, schmackhaftes Konzentrat nach irgendeinem der vorhergehenden Ansprüche, wobei das Lebensmittelprodukt eine Wasseraktivität von 0,5-0,9, bevorzugter von 0,55-0,85, am meisten bevorzugt zwischen 0,60 und 0,80, aufweist.

9. Geformtes, zusammengesetztes, schmackhaftes Konzentrat nach irgendeinem der vorhergehenden Ansprüche, wobei das zusammengesetzte Lebensmittelprodukt Alkalimetallkationen in einer Konzentration von mindestens 50 mmol pro 100 g Wasser enthält.

10. Geformtes, zusammengesetztes, schmackhaftes Konzentrat nach irgendeinem der vorhergehenden Ansprüche, wobei das Geliermittel ausgewählt ist aus der Gruppe von Agar, Carrageenanen, Pektinen, Xanthangummi, Galactomannanen, Glucomannanen, Hülsenfruchtstärke und Kombinationen davon.

11. Geformtes, zusammengesetztes, schmackhaftes Konzentrat nach irgendeinem der vorhergehenden Ansprüche, wobei das Lebensmittelprodukt 0,3-30 Gew.-%, bevorzugt 0,5-20 Gew.-%, der zum Geschmack beitragenden Komponenten enthält, wobei bevorzugt mindestens 0,1 Gew.-%, bevorzugt mindestens 0,3 Gew.-%, geschmacksverstärkende Komponenten aus Glutamat, 5'-Ribonucleotiden und Kombinationen davon ausgewählt sind.

12. Geformtes, zusammengesetztes, schmackhaftes Konzentrat nach irgendeinem der vorhergehenden Ansprüche, wobei das geformte, zusammengesetzte, schmackhafte Konzentrat in einer Einheitsdosis verpackt ist, bevorzugt mit einem Gewicht von 2 g bis 50 g, bevorzugt 4 g bis 40 g, bevorzugter 6 g bis 30 g, bevorzugter 8 g bis 25 g.

13. Verfahren zur Herstellung eines geformten, zusammengesetzten, schmackhaften Konzentrats nach irgendeinem der vorhergehenden Ansprüche, wobei das Verfahren das Mischen von Gelstücken mit Lebensmittelpartikeln auf Gewebebasis und das Pressen der Mischung von Gelstücken und Lebensmittelpartikeln auf Gewebebasis zusammen in einer Form umfasst.

14. Verfahren nach Anspruch 13, wobei Gelstücke mit einem Wassergehalt von 50-90 Gew.-% mit Lebensmittelpartikeln auf Gewebebasis mit einem Wassergehalt von weniger als 20 Gew.-% gemischt werden.

15. Verwendung eines geformten, zusammengesetzten, schmackhaften Konzentrats nach irgendeinem der Ansprüche 1 bis 12 zur Herstellung einer Sauce, einer Brühe oder einer Bratensoße oder einer Suppe.

## Revendications

1. Concentré savoureux composite, en forme de prisme comprenant au moins 35 % en masse de plusieurs pièces de gel et 0,2-55 % en masse de particules d'aliment à base de tissu discrètes contenant au moins 50 % en masse de matière sèche de matériau de tissu de plantes ou d'animaux, sur la base d'une masse totale du concentré ; ledit concentré savoureux composite, façonné ayant la composition suivante :
● 20-75 % en masse d'eau ;
● 0,1-40 % en masse de constituants contribuant au goût choisis parmi l'acide glutamique, des 5'-ribonucléotides, du saccharose, glucose, fructose, lactose, acide lactique, acide citrique, acide acétique et des combinaisons de ceux-ci ;
● 0,5-20 % en masse d'eau d'agent gélifiant ;
● 35-1100 mmol pour 100 g de concentré de cation de métal alcalin choisi parmi Na⁺, K⁺ et des combinaisons de ceux-ci.

2. Concentré savoureux composite, façonné selon la revendication 1, dans lequel le concentré est un cuboïde ou cubique, de préférence dans lequel la surface du concentré en forme de prisme a l'apparence d'une texture irrégulière.

3. Concentré savoureux composite, façonné selon la revendication 1 ou 2, dans lequel la combinaison des pièces de gel et des particules d'aliment à base de tissu constitue au moins 70 % en masse, de préférence au moins 80 % en masse et bien mieux encore au moins 90 % en masse du concentré savoureux composite, façonné.

4. Concentré savoureux composite, façonné selon la revendication 1 ou 2, dans lequel les particules d'aliment à base de tissu contiennent au moins 70 % en masse de matière sèche de matériau de tissu de plantes ou d'animaux.

5. Concentré savoureux composite, façonné selon la revendication 4, dans lequel le produit contient au moins 1 % en masse, de préférence au moins 3 % en masse de pièces de matériau de plante, ledit matériau de plante étant choisi parmi des légumes, herbes, épices, fruits et combinaisons de ceux-ci, ledit matériau de plante ayant de préférence une taille de maillage dans l'intervalle de 0,2-10 mm.

6. Concentré savoureux composite, façonné selon l'une quelconque des revendications précédentes, dans lequel le produit d'aliment comprend au moins 45 % en masse, de préférence 50-95 % en masse des pièces de gel.

7. Concentré savoureux composite, façonné selon l'une quelconque des revendications précédentes, dans lequel les pièces de gel présentent une taille de maillage dans l'intervalle de 0,2-10 mm.

8. Concentré savoureux composite, façonné selon l'une quelconque des revendications précédentes, dans lequel le produit d'aliment présente une activité d'eau de 0,5-0,9, encore mieux de 0,55-0,85, bien mieux encore de 0,60 à 0,80.

9. Concentré savoureux composite, façonné selon l'une quelconque des revendications précédentes, dans lequel le produit d'aliment composite contient un cation de métal alcalin dans une concentration d'au moins 50 mmol pour 100 g d'eau.

10. Concentré savoureux composite, façonné selon l'une quelconque des revendications précédentes, dans lequel l'agent gélifiant est choisi dans le groupe d'agar, carraghénanes, pectines, gomme xanthane, galactomannanes, glucomannanes, amidon de légume et combinaisons de ceux-ci.

11. Concentré savoureux composite, façonné selon l'une quelconque des revendications précédentes, dans lequel le produit d'aliment contient 0,3-30 % en masse, de préférence 0,5-20 % en masse des constituants contribuant au goût, de préférence dans lequel au moins 0,1 % en masse, de préférence au moins 0,3 % en masse de constituants promouvant le goût choisis parmi du glutamate, des 5'-ribunocléotides et des combinaisons de ceux-ci.

12. Concentré savoureux composite, façonné selon l'une quelconque des revendications précédentes, dans lequel le concentré savoureux composite, façonné est emballé dans une dose unitaire, ayant de préférence une masse qui présente une masse de 2 g à 50 g, de préférence de 4 g à 40 g, encore mieux de 6 g à 30 g, bien mieux encore de 8 g à 25 g.

13. Procédé de préparation d'un concentré savoureux composite, façonné selon l'une quelconque des revendications précédentes, ledit procédé comprenant le mélange de pièces de gel avec des particules d'aliment à base de tissu et le pressage du mélange de pièces de gel et de particules d'aliment à base de tissu ensemble dans un moule.

14. Procédé selon la revendication 13 sur quoi des pièces de gel ayant une teneur en eau de 50-90 % en masse sont mélangées avec des particules d'aliment à base de tissu ayant une teneur en eau inférieure à 20 % en masse.

15. Utilisation d'un concentré savoureux composite, façonné selon l'une quelconque des revendications 1 à 12 pour la préparation d'une sauce, d'un bouillon, ou d'un jus de viande ou d'une soupe.
